# EUROPEAN PATENT SPECIFICATION

(11) **EP 0 842 797 B1**
(45) Date of publication and mention of the grant of the patent: **06.02.2002**
(21) Application number: 97203567.9
(22) Date of filing: 15.11.1997
(51) Int. Cl.: B60G 17/027, B62K 27/06

(54) **Wheel suspension for a vehicle**
Radaufhängung für ein Fahrzeug
Suspension de roue pour un véhicule

(30) Priority: 15.11.1996 NL 1004541
(43) Date of publication of application: 20.05.1998
(73) Proprietor: Reiger Racing Suspension, 7255 AX Hengelo (Gld) (NL)
(72) Inventor: Seesing, Gerard, 7255 AX Hengelo (Gld) (NL)
(74) Representative: Dokter, Hendrik Daniel

(56) References cited:
- EP-A- 0 199 915
- DE-A- 3 410 115
- DE-A- 19 517 074
- JP-A- 59 011 906
- US-A- 4 511 160
- PATENT ABSTRACTS OF JAPAN vol. 010, no. 047 (M-456), 25 February 1986 -& JP 60 197415 A (MAZDA KK), 5 October 1985,
- PATENT ABSTRACTS OF JAPAN vol. 012, no. 227 (M-713), 28 June 1988 -& JP 63 022710 A (FUJI HEAVY IND LTD), 30 January 1988,
- "P.WY.": "Technique F1 1981 (II)" REVUE AUTOMOBILE., vol. 75, no. 53, 24 December 1981, BERNE CH, page 17 XP002035341

## Description

The invention relates to a wheel suspension for a wheel on a non-steered axle under a vehicle, comprising the features defined in the preamble of claim 1.

From the Japanese patent application JP-A-63 022710, on which the preamble of claim 1 is based, is known a wheel suspension, wherein two interlocked liquid pressure cylinder devices are expanded or shrinked in order to change the toe angle of inner and outer wheels when the suspension arm angle is changed during a turn. When a side force is applied to a rear wheel of a vehicle, a moment is generated on a suspension arm and front end sections thereof, causing bending of bushes and displacement thereof along shafts, resulting in the movement of a first hydraulic cylinder device connected to a front end section, in order to correspondingly shrink or extend a second hydraulic cylinder device. As a result, an arm is rotated centering a shaft, thus an axle is angle-displaced, and the toe angle of the rear wheel is changed in the toe-in direction. Accordingly, the stroke ratio between both hydraulic cylinder devices is adequately set, and the toe angle of the rear wheel changed in the toe-in direction.

From the European patent application EP-A-0 199 915 is known a rear wheel suspension in which a double crossguide member formed of two upper and two lower guide arms is povotally connected at a wheel carrier and forms an elastokinematic axis of rotation whith an ideal wheel steering pole.

Further is disclosed in the German patent application DE-A-3 410 115 a passenger car whose rear wheels are coupled elasto-kinematically to the body of the vehicle by specifying an advance movement (lateral force application before the instantaneous pole of the wheel suspension) in such a way that they are automatically subjected to a wheel lock in the direction of understeering (countersteering) under the effect of lateral forces engaging on them.

In the Japanese patent application JP-A-59 011 906 it is proposed to improve the stability of a car, by providing a mechanism, in which a tire is allowed to toe in by a horizontal component of reation force of a stabilizer due to one side bumping action whe lateral force is applied at concerning operation, to a rear suspension.

It is further known to improve the road-holding of for instance a four-wheeled motor vehicle by making the axles of all four wheels steerable. A drawback of four-wheel drive is the greatly reduced possibility of correcting the course of a vehicle which has gone into a skid, because applying opposite lock to the front wheels in the case of skidding is inherently associated with applying opposite lock to the rear wheels, as a result of which the rear part of the vehicle will have a strong tendency to skid in a direction opposite to that of the original skid.

A generally known phenomenon occurring in a vehicle with a known wheel suspension is the considerable heeling over of the vehicle in a bend at higher speeds, which can be considered a serious drawback in certain conditions.

The object of the invention is to provide a wheel suspension with which under normal driving conditions as well as at higher speeds an extremely stable and reliable road-holding is obtained on straight stretches and in bends, and which exerts a course-correcting effect on the vehicle when the vehicle goes into a skid.

The object of the invention is further to provide a wheel suspension using which the heeling of a vehicle in a bend is greatly reduced.

These objectives are realized by means of the characterising features of claim 1.

The support member functions as a piston rod which can be received partially in the cylinder or extends in the line of such a piston rod.

Because in a wheel suspension according to the invention the relevant wheel in a forward travelling vehicle is directed with its side surfaces in the translation direction of this wheel, there is achieved that the position of this wheel corresponds optimally with the momentary travel direction of this wheel, whereby a greatly improved road-holding is obtained. Further achieved is that in response to a sudden change in the position of the wheels on the steered axles, which change is for instance carried out to correct an occurring skid of the vehicle, the wheels in a suspension according to the invention are placed in a position which contributes toward restoring the travel direction of the vehicle intended by the driver.

In order to damp changes in speed which occur in the speed of displacement of the at least one support member, for instance as a result of impact forces in transverse direction on the wheel which can occur in the case of contact with an unevenness in the road surface, in yet another embodiment the displacing means comprise damping means.

In one embodiment the displacing means comprise spring means for exerting a force on the support member directed counter to the displacement of this displaceable support member, whereby the displacement of this support member, and therewith the change in the position of the wheel support, can be limited in simple manner to a range which corresponds with the range of the transverse forces acting on the relevant wheel.

In a preferred embodiment the first piston is provided with at least one passage opening for passage of liquid from a first space in the cylinder bounded by a first side of the piston to a second space in the cylinder bounded by a second side of the piston, wherein at least one of said spaces in the cylinder is in communication with a buffer volume for the liquid. The displacement of the piston in such a hydraulic cylinder and the displaceable support member coupled to this piston proceeds continuously, wherein jolting movements resulting from impact forces transversely of the wheel are damped by the damping effect of the piston provided with a passage.

In an advantageous embodiment of a wheel suspension according to the invention, wherein the chassis of the vehicle supports by means of a spring on the wheel support in a manner such that an outer end of the spring is connected to the chassis and another outer end of the spring supports on the wheel support, detector means are provided for detecting the displacement of the at least one support member, and the distance between the chassis and said one outer end of the spring is adjustable using drive means, which drive means respond to a signal generated by the detectors in a manner such that said distance is increased or decreased on detection of a displacement of the at least one support member under the influence of an inward respectively outward transverse force exerted on the relevant wheel.

With a wheel suspension according to this advantageous embodiment the part of the chassis at the position of this wheel suspension is pressed upward when a strong inward force is exerted on the relevant wheel, or the relevant chassis part is given space to descend when a strong outward force is exerted on the wheel, which forces occur when the vehicle negotiates a bend. The change in the position of the chassis relative to the wheel support in this wheel suspension reduces vehicle heeling to a considerable degree during travel in a bend, thus greatly enhancing the road-holding and the comfort experienced by the passengers.

In this latter embodiment the drive means comprise for instance a second cylinder with a piston displaceable therein, which second cylinder is placed between the chassis and said one outer end of the spring, wherein the distance between the chassis and said one outer end is determined by the position of the piston in the second cylinder in a manner such that said distance is increased or decreased on detection of a displacement of the at least one support member under the influence of an inward respectively outward transverse force exerted on the relevant wheel.

In a preferred embodiment of a wheel suspension according to the invention, wherein the displacing means comprise a first hydraulic cylinder, the piston of which is provided with at least one passage opening for passage of liquid from a first space in the cylinder bounded by a first side of the piston to a second space in the cylinder bounded by a second side of the piston, and wherein at least one of said spaces in the cylinder is in communication with a buffer volume for the liquid, and wherein the chassis of the vehicle supports by means of a spring on the wheel support in a manner such that one outer end of the spring is connected to the chassis and another outer end of the spring supports on the wheel support, a second hydraulic cylinder with a second piston displaceable therein is placed according to the invention between the chassis and said one outer end of the spring, wherein the distance between the chassis and said one outer end is determined by the position of the second piston, which second hydraulic cylinder forms the buffer volume for the liquid in the first hydraulic cylinder in a manner such that said distance is increased or decreased in the case of a displacement of the at least one support member under the influence of an inward respectively outward transverse force exerted on the relevant wheel.

In a vehicle with a wheel suspension according to this preferred embodiment, the operation of the spring system with which the chassis supports on the relevant wheels is influenced in a particularly reliable and advantageous hydraulic-mechanical manner such that heeling of the vehicle in a bend is prevented, wherein it is not necessary to have detectors available for detecting a quantity related in any way whatsoever to the heeling of the vehicle.

In one embodiment the at least one displaceable support member is a support arm provided with a hinge, round which support arm the wheel support is hingedly received. In such a wheel suspension a per se known pivot point for the wheel support is made displaceable in transverse direction according to the invention in a structurally advantageous manner.

In an advantageous embodiment the at least one support member comprises a rotor which is displaceable in transverse direction of the vehicle and the rotation axis of which encloses an acute angle with the direction of displacement, from which rotor extends the wheel support fixedly coupled thereto.

The invention will be elucidated hereinbelow on the basis of embodiments and with reference to the annexed drawings.

In the drawings:
Fig. 1 shows a simplified top view of a motorcycle with sidecar, provided with a wheel suspension according to a first preferred embodiment of the invention,
Fig. 2a shows a simplified top view of the wheel suspension of fig. 1,
Fig. 2b shows a simplified rear view of the wheel suspension of fig. 2a, provided with a strut unit with shock absorber,
Fig. 3 shows a detail of the wheel suspension of fig. 2a,
Fig. 4 is a schematic representation in top view of another embodiment of a wheel suspension according to the invention for a motorcycle with sidecar,
Fig. 5 is a schematic representation in top view of yet another embodiment of a wheel suspension according to the invention for a motorcycle with sidecar,
Fig. 6 shows a simplified top view of a four-wheeled motor vehicle provided with a wheel suspension according to a second preferred embodiment of the invention,
Fig. 7a is a schematic representation in top view of the wheel suspension according to the preferred embodiment of fig. 6,
Fig. 7b shows a simplified rear view of the wheel suspension of fig. 7a provided with a strut unit with shock absorber,
Fig. 8 is a schematic representation in top view of a following embodiment of a wheel suspension according to the invention for a four-wheeled motor vehicle,
Fig. 9 is a schematic representation in top view of yet another embodiment of a wheel suspension according to the invention for a four-wheeled motor vehicle,
Fig. 10 is a schematic representation in rear view of a further embodiment of a wheel suspension according to the invention provided with a strut unit with shock absorber for a four-wheeled motor vehicle,
Fig. 11a is a schematic representation in top view of a following embodiment of a wheel suspension according to the invention,
Fig. 11b shows a simplified side view of the wheel suspension of fig. 11a,
Fig. 12 is a schematic representation in top view of yet another embodiment of a wheel suspension according to the invention, and
Fig. 13 shows a detail of the wheel suspension of fig. 12.

Corresponding components are designated in the figures with the same reference numerals.

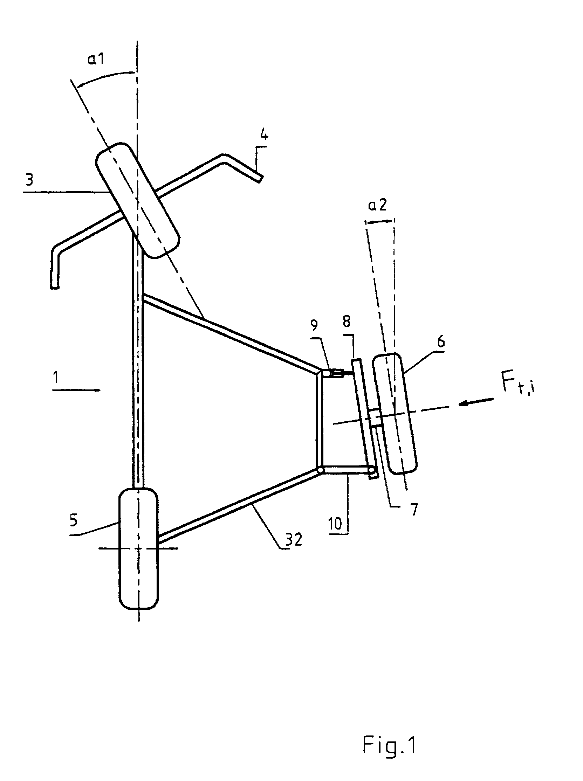

Fig. 1 shows schematically in top view a motorcycle 1 with chassis 32, provided with a wheel suspension according to a first preferred embodiment of the invention. Shown are a steered front wheel 3 with handlebar 4, a rear wheel 5 and a sidecar wheel 6 on an axle 7 which is mounted on a wheel support 8, which is in turn pivotally mounted on a front support arm 9 displaceable in transverse direction and which is mounted by means of ball joints on a rear support arm 10 pivotable in a vertical transverse plane from chassis 32.

In the shown situation the front wheel is rotated to the left through an angle α₁, so that in the travelling situation the motorcycle follows a bend to the left, as a result of which the sidecar wheel 6 is subjected by the road surface to an inward directed force F_{t,1} (designated with the arrow) This transverse force presses via axle 7 and wheel support 8 on the rear support arm 10 which is rigid in transverse direction and on the front support arm 9 which is displaceable in transverse direction, and causes a displacement of this support arm 9 in inward direction, which results in a rotation of the wheel support 8 on its mounting point on the end of the rear support arm 10, and an accompanying change in the position of sidecar wheel 6 in a manner such that this sidecar wheel 6 is directed with its side surfaces in the translation direction of this wheel, wherein these side surfaces enclose an angle α₂ with the longitudinal direction of the motorcycle.

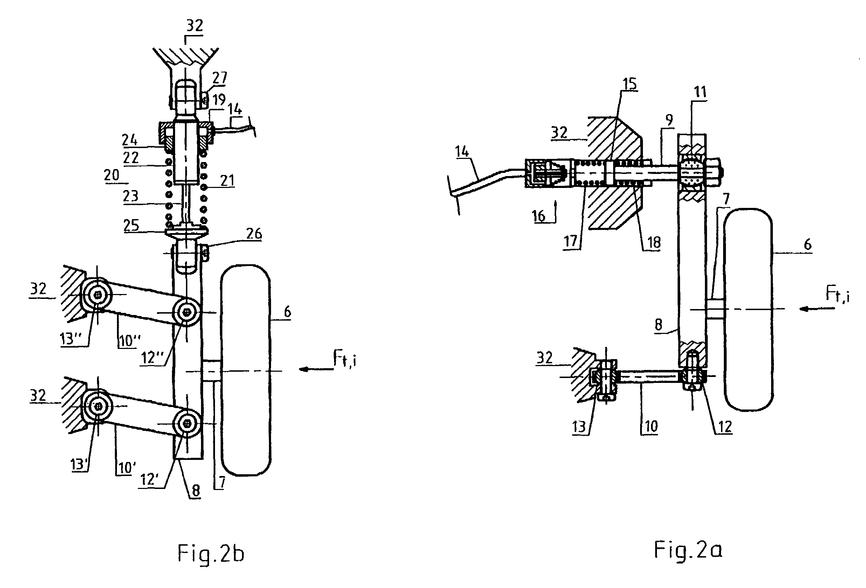

Fig. 2a shows a simplified top view of the wheel suspension of fig. 1, in which is shown how wheel support 8 is arranged between support arms 9, 10 by means of ball joints 11, 12 and how the rear support arm 10 is connected to chassis 32 by means of a ball joint 13. The front support arm 9 functions as piston rod for a piston 15 which is enclosed displaceably between two pressure springs 17, 18 in a hydraulic cylinder 16 which is fixedly connected to chassis 32 and which is connected via a liquid conduit 14 to a second hydraulic cylinder 19 (shown in fig. 2b).

Fig. 2b shows in rear view the wheel suspension of fig. 2a provided with a strut unit 20 with shock absorber. Support arm 10 is formed in the shown example by two parallel arms 10', 10" which are connected by ball joints 12', 12", 13', 13" to respectively wheel support 8 and chassis 32. The chassis 32 supports on wheel support 8 by means of a strut unit 20 which is formed by a helical spring 21 arranged round a shock absorber tube 22 with piston rod 23 and enclosed between an upper spring cup 24 and a lower spring cup 25. The lower spring cup 25 connected to piston rod 23 is fixed in usual manner to wheel support 8 using a fastening bolt 26, the upper spring cup 24 is formed by the piston of the above mentioned second hydraulic cylinder 19, which is arranged round shock absorber tube 22. The shock absorber tube 22 is coupled fixedly to the chassis in usual manner using a fastening bolt 27.

The operation of the wheel suspension shown in figures 2a, b is as follows. As soon as a motorcycle with sidecar provided with this wheel suspension takes a bend to the left, the sidecar wheel 6 undergoes an inward directed force F_{t,i}, which is transmitted via axle 7 and wheel support 8 to the rear support arm 10, which is not displaceable in transverse direction, and the front support arm 9 which will be pressed into cylinder 16 by the action of the transferred force. The part of the sidecar following the bend with the largest radius is subjected to a force in downward direction, which force is absorbed by helical spring 21, wherein a state of equilibrium results and the sidecar, if it is equipped with a prior art wheel suspension, is pressed downward to a determined extent. In the shown wheel suspension however, pressing of support arm 9 into the first hydraulic cylinder 16 results in a displacement of the liquid in this cylinder 16 via the liquid conduit 14 to the second hydraulic cylinder 19, which as a result is pressed upward relative to piston 24, and the distance between the two fastening bolts 26, 27 is increased whereby the effects of compressing the helical spring 21 for the position of the sidecar are compensated and a better, stable road-holding is obtained.

The extent to which piston 15 is displaced from a particular rest position is determined by an equilibrium of the occurring forces, i.e. the part of the transverse force F_{t,1} transmitted to support arm 9, the spring force generated by the helical spring 21 of the spring system and the springs 17 and 18 in the first cylinder 16 and by the damping caused by the shock absorber 22, 23 and the hydraulic system formed by the two cylinders 16, 19 and the liquid conduit therebetween.

When following a bend to the right, the sidecar wheel 6 will of course be subjected to an outward directed transverse force and the front support arm 9 will be pulled out of cylinder 16, as a result of which the wheel 6 will be directed to the right by wheel support 8 and liquid will be drawn in by the first cylinder 16 via liquid conduit 14 from the second cylinder 19, as a result of which the distance between the piston/spring cup 24 and the upper fastening bolt 27 is reduced, whereby an increase in the distance between the two fastening bolts 26, 27 as occurring in the strut unit of the prior art and resulting from the extending of helical spring 21 can be compensated.

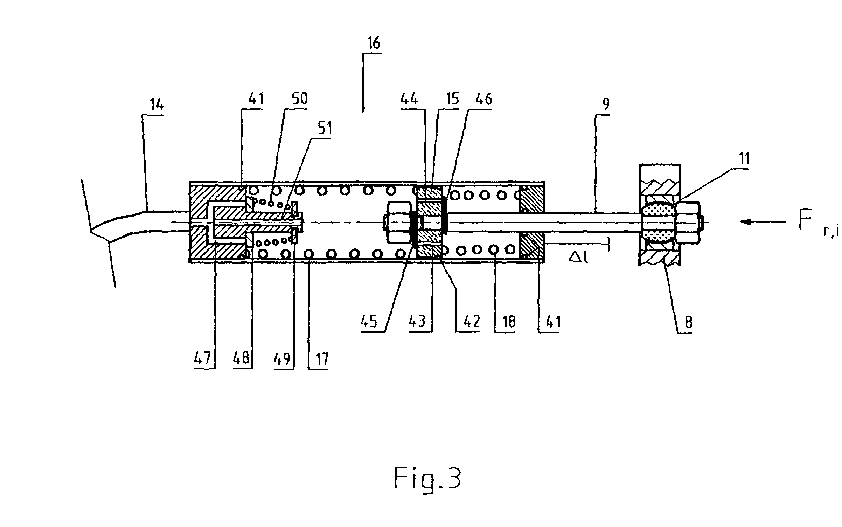

Fig. 3 shows a detail of the wheel suspension of fig. 2a, with cylinder 16 and the piston 15 which is displaceable therein and on which pressure springs 17, 18 support on either side. The wheel support 8 is pivotally connected to piston rod 9 by means of a ball joint 11. The passage opening in cylinder 16 for piston rod 9 and piston 15 is provided with grooves in which sealing rings 41, 42 are arranged, the cylinder 16 is filled with a suitable liquid, for instance oil. The piston 15 is provided with passage openings 43, 44 which are closed off by resilient covers 45 respectively 46. The conduit 14 branches in the base of cylinder 16 into an inlet line 47, which is closed by a cover 48 under pressure of a spring 50 adjustable with a screw 49, and a much smaller outlet line 51 which runs through screw 49. The operation of the device shown in the figure is as follows. As soon as the wheel on wheel support 8 is subjected to an inward transverse force F_{t,i} because the associated motorcycle with sidecar moves into a bend to the left, the support arm/piston rod 9 is subjected to a part F_{r,i} of the transverse force F_{t,i} transmitted by wheel 6, axle 7 and wheel support 8, as a result of which a part Δ*l* of piston rod 9 is driven into the cylinder 16. Due to the displacement of piston 15 (to the left in the figure), oil flows through the opening 44 in piston 15 from the left to the right-hand part of cylinder 16, wherein the effect of impact forces on piston rod 9 is damped by the resilient cover 46. A quantity of oil corresponding with the volume of the part Δ*l* of piston rod 9 is pressed into conduit 14 via outlet line 51, which has such a small cross section that while piston 15 is displaceable under the influence of a continuous transverse force, it is insensitive to a short impact such as can occur when wheel 6 makes contact with a bump in the road surface. When the straight course has been restored, oil is pressed via conduit 14 and inlet line 47 into cylinder 16, under the influence of which the piston 15 is displaced through a distance Δ*1* and a corresponding part of piston rod 9 is pressed outward, wherein jolting movements are now damped by the resilient cover 45 on passage opening 43 in piston 15.

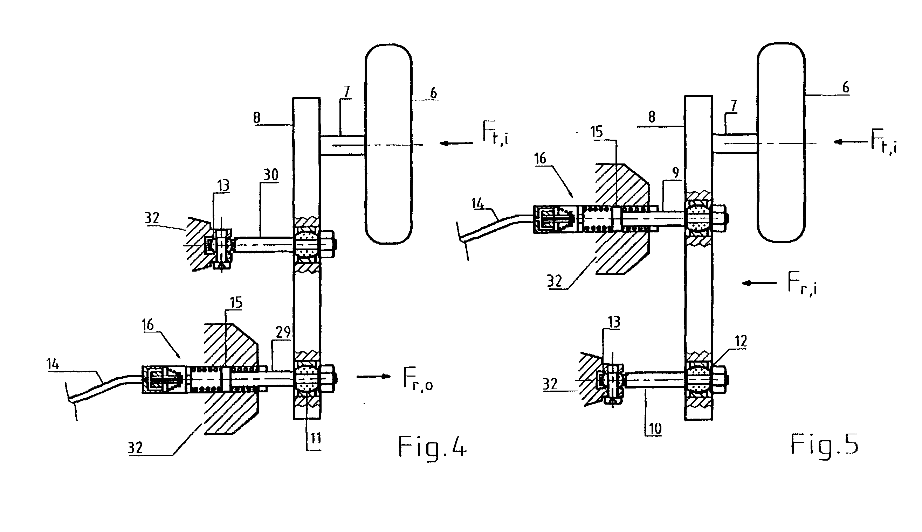

Fig. 4 is a schematic representation in top view of another embodiment of a wheel suspension according to the invention for a motorcycle with sidecar, wherein the axle 7 extends from a part of wheel support 8 protruding in front of the front support arm 30, which wheel suspension is provided with displacing means 15, 16 for causing outward respectively inward displacement of the rear support arm 29 in transverse direction of the vehicle under the influence of an inward (F_{t,i}) respectively outward transverse force exerted on the wheel. Shown here is how wheel support 8 is arranged between support arms 30, 29 by means of ball joints 11, 12 and how the front support arm 30 is connected to chassis 32 by means of a ball joint 13. The rear support arm 29 functions as piston rod for a piston 15 which is enclosed for displacement between two pressure springs 17, 18 in a hydraulic cylinder 16 which is fixedly connected to chassis 32 and connected via a liquid conduit 14 to a buffer volume (not shown). An inward transverse force F_{t,1} on wheel 6 is transmitted via axle 7 and wheel support 8, whereby an outward transverse force F_{r,o} is exerted on rear support arm 29.

Fig. 5 is a schematic representation in top view of yet another embodiment of a wheel suspension according to the invention for a motorcycle with sidecar, wherein axle 7 extends from a part of wheel support 8 protruding in front of the front support arm 9, which wheel support is provided with displacing means 15, 16 for causing inward respectively outward displacement of front support arm 9 in transverse direction of the vehicle under the influence of an inward (F_{t,i}) respectively outward transverse force exerted on the wheel. Shown here is how wheel support 8 is arranged between support arms 9, 10 by means of ball joints 11, 12 and how rear support arm 10 is connected to chassis 32 by means of a ball joint 13. The front support arm 9 functions as piston rod for a piston 15 which is enclosed for displacement between two pressure springs 17, 18 in a hydraulic cylinder 16 which is fixedly connected to chassis 32 and connected via a liquid conduit 14 to a second hydraulic cylinder (not shown). An inward transverse force F_{t,1} on wheel 6 is transmitted via axle 7 and wheel support 8, whereby an inward transverse force F_{r,1} is exerted on front wheel support 9.

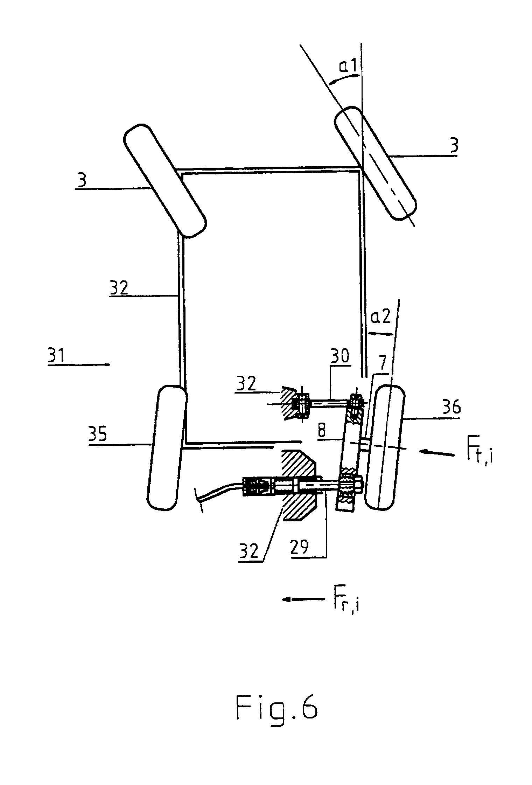

Fig. 6 shows schematically in top view a four-wheeled motor vehicle 31 with chassis 32 provided with a wheel suspension according to a second preferred embodiment of the invention. Shown here are steered front wheels 3, a left rear wheel 35 and a right rear wheel 36 on an axle 7 which is mounted on a wheel support 8 which is in turn mounted pivotally on a rear support arm 29 displaceable in transverse direction and which is fixed by means of ball joints to a front support arm 30 which is pivotable in a vertical transverse plane from chassis 32.

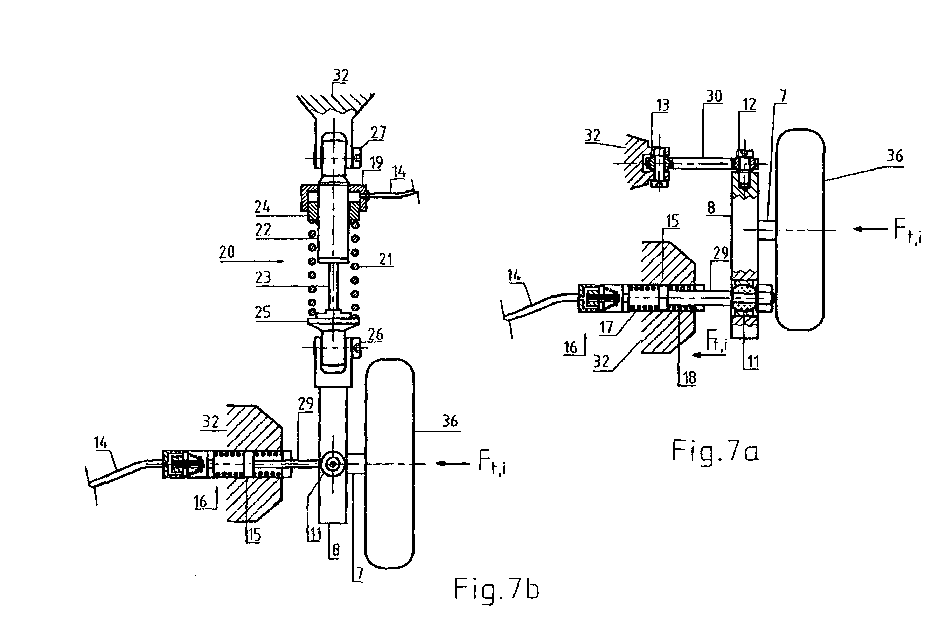

In the shown situation the front wheels 30 are turned to the left through an angle α₁, so that the vehicle follows a bend to the left when travelling, as a result of which the right rear wheel 36 is subjected to an inward directed force F_{t,i} (designated with the arrow) by the road surface. This transverse force presses via axle 7 and wheel support 8 on the front support: arm 30, which is rigid in transverse direction, and the rear support arm 29, which is displaceable in transverse direction, and causes a displacement of this support arm 29 in inward direction, which results in a rotation of wheel support 8 round its point of attachment on the end of front support arm 30 and an associated change in the position of rear wheel 36 in a manner such that this rear wheel 36 is directed with its side surfaces in the translation direction of this wheel, wherein these side surfaces enclose an angle α₂ with the longitudinal direction of the motor vehicle. (A mirror-symmetrically embodied wheel suspension for the left rear wheel 35 results in similar manner in directing of this wheel in the translation direction thereof when a bend to the left is negotiated.) Fig. 7a shows a simplified top view of the wheel suspension of fig. 6, which indicates how wheel support 8 is received between support arms 9, 10 by means of ball joints 11, 12 and how the front support arm 30 is connected to chassis 32 by means of a ball joint 13. The rear support arm 29 functions as piston rod for a piston 15 which is enclosed for displacement between two pressure springs 17, 18 in a hydraulic cylinder 16 which is fixedly connected to chassis 32 and which is connected via a liquid conduit 14 to a second hydraulic cylinder 19 (shown in fig. 7b).

Fig. 7b shows in rear view the wheel suspension of fig. 7a, provided with a strut unit 20 with shock absorber. Chassis 32 supports on wheel support 8 by means of a strut unit 20 which is formed by a helical spring 21 which is arranged round a shock absorber tube 22 with piston rod 23 and which is enclosed between an upper spring cup 24 and a lower spring cup 25. The lower spring cup 25 connected to piston rod 23 is fixed in the usual manner to wheel support 8 using a fastening bolt 26, the upper spring cup 24 is formed by the piston of the above mentioned second hydraulic cylinder 19 which is arranged round shock absorber tube 22. The shock absorber tube 22 is fixedly coupled to the chassis in the usual manner using a fastening bolt 27.

The operation of the wheel suspension shown in figures 7a, b is as follows. As soon as a motor vehicle provided with this wheel suspension enters a bend to the left, the right rear wheel 36 undergoes an inward directed force F_{t,1}, which is transmitted via axle 7 and wheel support 8 to the front support arm 30, which is not displaceable in transverse direction, and the rear support arm 29, which will be pressed into cylinder 16 by the effect of the transmitted force. The part of the chassis following the bend with the largest radius is subjected to a force in downward direction, which force is absorbed by helical spring 21, wherein a state of equilibrium results and the sidecar, if equipped with a wheel suspension of the prior art, is pressed downward to a certain extent. However, in the shown wheel suspension, pressing of the support arm 9 into the first hydraulic cylinder 16 results in a displacement of the liquid in that cylinder 16 via liquid conduit 14 to the second hydraulic cylinder 19, which as a consequence is pressed upward relative to piston 24, and the distance between the two fastening bolts 26, 27 is increased, whereby the effects of compressing the helical spring 21 for the position of the chassis are compensated and a better, stable road-holding is obtained. A further improvement in the position of the chassis can be achieved if the effects of compressing a spring with which the chassis supports on a wheel support of a front wheel situated on the same side as rear wheel 36 is also compensated using a hydraulic cylinder which is placed above this spring and which is likewise connected to liquid conduit 14.

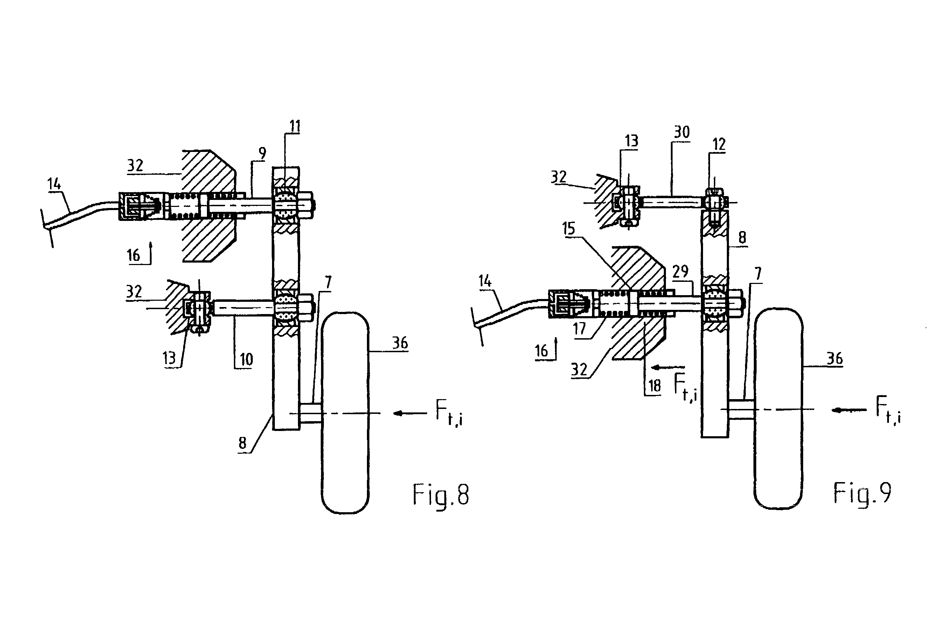

Fig. 8 is a schematic representation in top view of a following embodiment of a wheel suspension according to the invention for a four-wheeled motor vehicle, wherein axle 7 extends from a part of wheel support 8 protruding behind rear support arm 10, which wheel support is provided with displacing means 15, 16 for causing front support arm 9 to displace outwardly respectively inwardly and in transverse direction of the vehicle under the influence of an inward (F_{t,i}) respectively outward transverse force exerted on wheel 6. An inward transverse force F_{t,i} on wheel 36 is transmitted via axle 7 and wheel support 8, whereby an outward transverse force F_{r,o} is exerted on front support arm 9. Shown here is how wheel support 8 is received between support arms 9, 10 by means of ball joints 11, 12 and how rear support arm 10 is connected to chassis 32 by means of a ball joint 13. The front support arm 9 functions as piston rod for a piston 15 which is enclosed for displacement between two pressure springs 17, 18 in a hydraulic cylinder 16 which is fixedly connected to chassis 32 and connected via a liquid conduit 14 to a buffer volume (not shown), which buffer volume is formed for instance by a second hydraulic cylinder above the strut unit of a wheel suspension on the opposite side of the vehicle.

Fig. 9 is a schematic representation in top view of yet another embodiment of a wheel suspension according to the invention for a four-wheeled motor vehicle, wherein axle 7 extends from a part of wheel support 8 protruding behind rear support arm 29, which wheel suspension is provided with displacing means 15, 16 for causing rear support arm 29 to displace inwardly respectively outwardly in transverse direction of the vehicle under the influence of an inward (F_{t,i}) respectively outward transverse force exerted on the wheel.

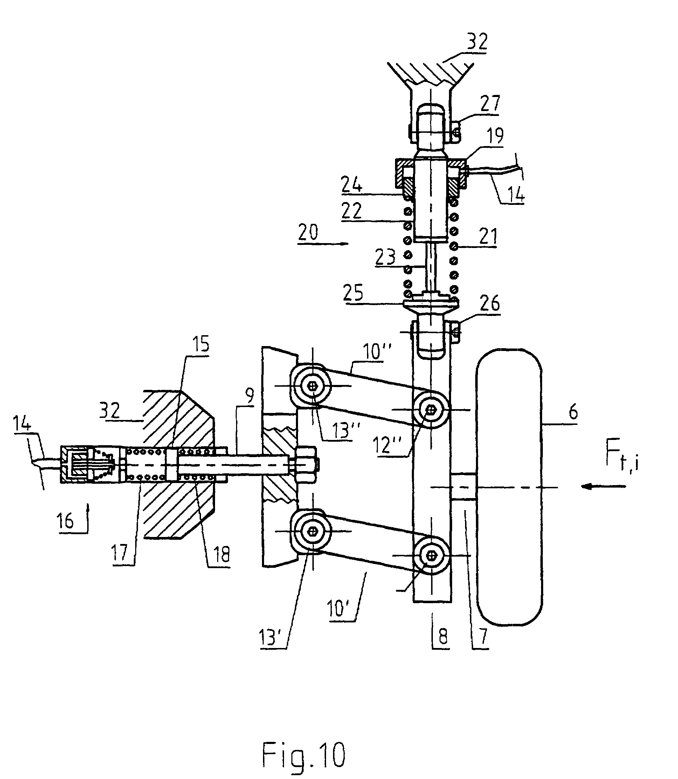

Fig. 10 shows a schematic representation in rear view of a further embodiment of a wheel suspension according to the invention, provided with a strut unit 20 with shock absorber for a four-wheeled vehicle, wherein the front support arm (not shown) is a supporting arm provided with a hinge and fixedly connected to chassis 32, round which supporting arm the wheel support 8 is pivotally arranged in known manner, and wherein the rear support arm 10, which is assembled from two parallel arms 10', 10" coupled pivotally to an element 38, is displaceable in transverse direction by means of a piston rod 39 coupled to element 38.

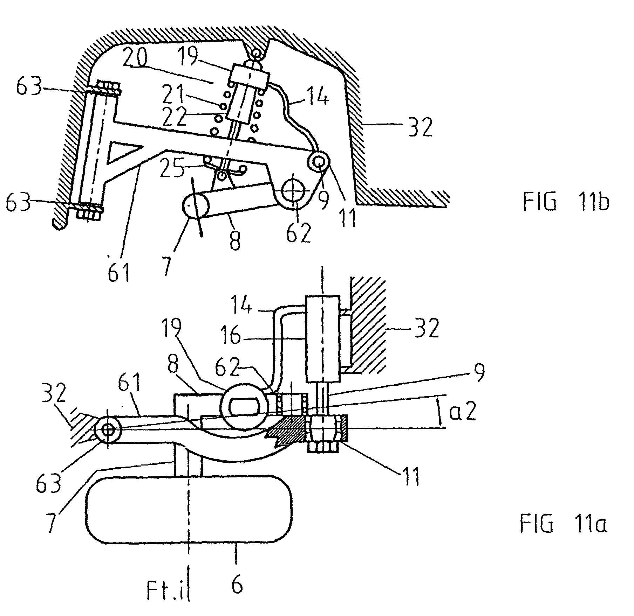

Fig. 11a shows a simplified top view of a following embodiment of a wheel suspension according to the invention, in which wheel support 8 is arranged on a support arm 9 by means of a ball joint 11, a coupling plate 61 and a ball bearing 62, wherein coupling plate 61 is mounted in bearings 63 for rotation through an angle α2 relative to chassis 32. Support arm 9 functions as piston rod for a piston which is enclosed for displacement in a hydraulic cylinder 16 which is fixedly connected to chassis 32 and connected via a liquid conduit 14 to a second hydraulic cylinder 19 in the same manner as discussed in figures 2a, b.

Fig. 11b shows in side view the wheel suspension of fig. 11a, provided with a strut unit 20 with shock absorber whereby chassis 32 supports on wheel support 8.

The operation of the wheel suspension shown in figures 11a, b is analogous to the operation of the wheel suspension shown in figures 2a, b and has already been elucidated in the description of figures 2a, b.

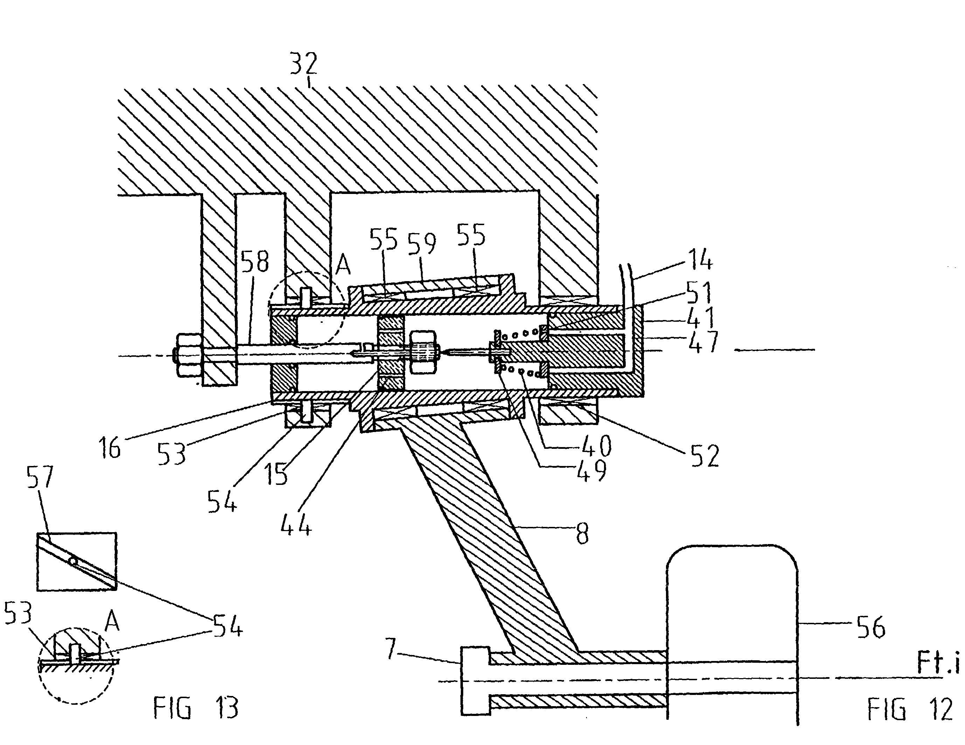

Fig. 12 shows a schematic representation in top view of a further embodiment of a wheel suspension, with chassis 32, cylinder 16 which is mounted in slide bearings 52, 53, displaceable in transverse direction of the vehicle and rotatable on its axis, wheel support 8, axle 7 and wheel 56. Wheel support 8 is fixedly coupled to a support member embodied as a sleeve 59 rotatable round cylinder 16 on bearings 55, wherein the rotation axis encloses an acute angle θ with the displacement direction of cylinder 16. Piston rod 58 of the piston 15 displaceable relative to cylinder 16 is fixedly coupled to chassis 32. Two oppositely located pins 54 coupled to chassis 32 co-act with grooves 57 in the surface of cylinder 16, which grooves 57 enclose an acute angle β with the axial direction x of the cylinder (detail A, fig. 13) in a manner such that cylinder 16 also performs a rotation movement during axial displacement, wherein cylinder 16 rotates in sleeve 59, as a result of which the position of wheel support 8, and therewith of wheel axle 7 and wheel 56 relative to chassis 32, is changed. The progression of grooves 57 in the surface of cylinder 16 is designed such that under the influence of a transverse force F_{t,i} exerted on wheel 56, the wheel 56 is directed with its side surfaces in the translation direction of this wheel 56. Piston 15 can be coupled to support member 59 in this embodiment in the sense that a change of position of piston 15 relative to cylinder 16 corresponds to a change in the inclination and the position of support member 59 relative to chassis 32.

It is noted that the above described embodiments serve to elucidate the invention and do not limit the scope thereof in any way.

A wheel suspension according to the invention which is particularly suitable for a wheel on a non-steered axle under the sidecar part of a motorcycle with sidecar is for instance generally suitable for a wheel on a non-steered axle under the front part of a motor vehicle with at least four wheels if this wheel must be placed in the same direction as the steered front wheels during travel through a bend.

A wheel suspension according to the invention which is particularly suitable for a wheel on a non-steered rear axle of a vehicle is for instance generally suitable for a wheel on a non-steered axle under the rear part of a motor vehicle if this wheel must be placed in a direction opposed to that of the steered front wheels during travel through a bend.

In the described wheel suspensions with a hydraulic coupling between a first hydraulic cylinder with a displaceable support arm movable therein and a second hydraulic cylinder above a helical spring, a coupling can be applied using a detector for detecting the displacement of the displaceable support arm and the second hydraulic cylinder can be controlled by a signal from the detector. It is moreover possible to apply a detector which detects the transverse force exerted on the wheel in question using the displacement of the support arm associated with this force.

A wheel suspension of the type defined in the preamble of Claim 1, wherein the chassis of the vehicle supports on the wheel support by means of a spring in a manner such that one end of the spring is connected to the chassis and another end of the spring supports on the wheel support, wherein detecting means are provided for detecting a transverse force exerted on the wheel in this suspension, and the distance between the chassis and said one end of the spring is adjustable using hydraulic drive means comprising a hydraulic cylinder and piston which drive means respond to a signal produced by the detecting means in a manner such that said distance is increased or decreased on detection of an inward respectively outward transverse force exerted on the wheel in question, also lies within the scope of this invention, as defined in claim 1.

## Claims

1. Wheel suspension for a wheel (6, 36, 56) on a non-steered axle (7) under a vehicle, comprising at least one support member (9, 29, 59) which in the operational state extends substantially in transverse direction of the vehicle, by which support member is received a wheel support (8) extending substantially in longitudinal direction, from which wheel support said axle (7) extends in transverse direction, which wheel suspension is provided with displacing means comprising a first hydraulic cylinder (16) and a first piston (15) displaceable therein, which first piston (15) can be coupled to the at least one displaceable support member (9, 29, 59), by means of which the at least one support member (9, 29, 59) is displaceable over a determined distance in transverse direction of the vehicle under the influence of a force exerted on the wheel (8) in transverse direction in a manner such that in a forward travelling vehicle the wheel (8) is directed with its side surfaces in the translation direction of this wheel by the wheel support (9, 29, 59), wherein the chassis (32) of the vehicle is supported by means of a spring (21) on the wheel support (8) in a manner such that a first end (24) of the spring (21) is connected to the chassis (32) and the other end (25) of the spring (21) is supported on the wheel support (8), **characterised in that** a second hydraulic cylinder (19) with a second piston (24) displaceable therein is placed between the chassis (32) and said first end (24) of the spring (21), wherein the distance between the chassis (32) and said first end (24) is determined by the position of the second piston, and **in that** the second piston (24) is coupled with the displacing means in a manner such that said distance is increased or decreased in the case of a displacement of the at least one support member (9, 29, 59) under the influence of an inward respectively outward transverse force exerted on the relevant wheel (6, 36, 56).

2. Wheel suspension as claimed in claim 1, **characterized in that** the displacing means comprise damping means (14, 15, 16) for damping changes in speed which occur in the displacement of the at least one displaceable support member (9, 29, 59).

3. Wheel suspension as claimed in claim 1 or 2, **characterized in that** the displacing means comprise spring means (17, 18) for exerting a force on the support member (9, 29, 59) directed counter to the displacement of this at least one displaceable support member.

4. Wheel suspension as claimed in any of the claims 1-3, **characterized in that** the first piston (15) is provided with at least one passage opening (43, 44) for passage of liquid from a first space in the cylinder (16) bounded by a first side of the piston (15) to a second space in the cylinder (16) bounded by a second side of the piston (15), and wherein at least one of said spaces in the cylinder (16) is in communication with a buffer volume for the liquid.

5. Wheel suspension as claimed in claim 4, **characterized in that** the second hydraulic cylinder (19) forms the buffer volume for the liquid in the first hydraulic cylinder (16).

6. Wheel suspension as claimed in any of the foregoing claims, **characterized in that**
detector means are provided for detecting the displacement of the at least one support member (9, 29, 59), and
the position of the second piston (24) and hence the distance between the chassis (32) and said one outer end (23) of the spring (21) is adjustable using hydraulic drive means comprising said second hydraulic cylinder (19) and said second piston (24), which drive means respond to a signal generated by the detector means in a manner such that said distance is increased or decreased on detection of a displacement of the at least one support member (9, 29, 59) under the influence of an inward respectively outward transverse force exerted on the relevant wheel (6, 36, 56).

7. Wheel suspension as claimed in claim 1, **characterized in that** the at least one displaceable support member is a support arm (9, 29) provided with a hinge, round which support arm (9, 29) the wheel support (8) is hingedly received.

8. Wheel suspension as claimed in any of the claims 1-6, **characterized in that** the at least one support member comprises a rotor (59) which is displaceable in transverse direction of the vehicle and the rotation axis of which encloses an acute angle with the direction of displacement, from which rotor (59) extends the wheel support (8) fixedly coupled thereto.

9. Wheel suspension as claimed in any of the claims 1-7, particularly for a wheel (6) on a non-steered axle under the sidecar part of a motorcycle with sidecar, wherein the wheel support (8), as seen in lengthwise direction of the vehicle, is received at its front by the displaceable support member (9) and said axle (7) extends from a part of the wheel support (8) located behind the displaceable support member (9).

10. Wheel suspension as claimed in any of the claims 1-4, particularly for a wheel (6) on a non-steered axle (7) under the sidecar part of a motorcycle with sidecar, wherein the wheel support (8), as seen in lengthwise direction of the vehicle, is received by at least two support members (29, 30) which are at a distance remote from each other in longitudinal direction and which in the operational state extend substantially in transverse direction of the vehicle, and wherein said axle (7) extends from a part of the wheel support (8) protruding in front of the front support member (30).

11. Wheel suspension as claimed in any of the claims 1-7, particularly for a wheel (6) on a non-steered axle (7) under the sidecar part of a motorcycle with sidecar, wherein this axle (7) extends from a part of the wheel support (8) protruding in front of the displaceable support member (9).

12. Wheel suspension as claimed in any of the claims 1-7, particularly for a wheel (36) on a non-steered rear axle (7) of a vehicle, wherein the wheel support (8), as seen in lengthwise direction of the vehicle, is received at its rear by the displaceable support member (29) and said axle (7) extends from a part of the wheel support (8) located in front of the displaceable support member (29).

13. Wheel suspension as claimed in any of the claims 1-4, particularly for a wheel (36) on a non-steered rear axle (7) of a vehicle, wherein the wheel support (8), as seen in lengthwise direction of the vehicle, is received by at least two support members (9, 10) which are at a distance remote from each other in longitudinal direction and which in the operational state extend substantially in transverse direction of the vehicle, and said axle (7) extends from a part of the wheel support (8) protruding behind the rear support member (29).

14. Wheel suspension as claimed in any of the claims 1-7, particularly for a wheel (36) on a non-steered rear axle (7) of a vehicle, wherein this axle (7) extends from a part of the wheel support (8) protruding behind the displaceable support member (29).

## Patentansprüche

1. Radaufhängung für ein Rad (6, 36, 56) auf einer starren Achse (7) unten am Fahrzeug, zumindest einen Tragkörper (9, 29, 59) umfassend, welcher sich während des Betriebs im Wesentlichen in Querrichtung zum Fahrzeug erstreckt, von welchem Tragkörper ein sich im Wesentlichen in Längsrichtung erstreckender Radträger (8) aufgenommen wird, von welchem Radträger sich genannte Achse (7) in Querrichtung erstreckt, welche Radaufhängung mit Verstellvorrichtungen ausgestattet ist, einen ersten Hydraulikzylinder (16) und darin einen ersten verstellbaren Kolben (15) umfassend, welcher erste Kolben (15) an zumindest einen verstellbaren Tragkörper (9, 29, 59) gekoppelt werden kann, wodurch zumindest ein Tragkörper (9, 29, 59) über einen bestimmten Abstand in Querrichtung zum Fahrzeug unter dem Einfluss einer in Querrichtung zum Rad (8) ausgeübten Kraft dergestalt verstellbar ist, dass bei einem sich vorwärts bewegenden Fahrzeug das Rad (8) mit seinen Seitenflächen vom Tragkörper (9, 29, 59) in Translationsrichtung zu diesem Rad gelenkt wird, wobei das Fahrgestell (32) des Fahrzeugs mittels einer Feder (21) am Radträger (8) dergestalt getragen wird, dass ein erstes Ende (24) der Feder (21) mit dem Fahrgestell (32) verbunden ist und das andere Ende (25) der Feder (21) vom Radträger (8) getragen wird, **dadurch gekennzeichnet, dass** ein zweiter Hydraulikzylinder (19) mit darin einem zweiten verstellbaren Kolben (24) zwischen dem Fahrgestell (32) und dem genannten ersten Ende (24) der Feder (21) angeordnet ist, wobei der Abstand zwischen dem Fahrgestell und dem genannten ersten Ende (24) von der Position des zweiten Kolben bestimmt wird und wobei der zweite Kolben (24) an den Verstellvorrichtungen derart gekoppelt ist, dass der genannte Abstand bei Verstellung zumindest eines der Tragkörper (9, 29, 59) unter dem Einfluss einer auf das betreffende Rad (6, 36, 56) ausgeübten inneren bzw. äußeren Querkraft vergrößert bzw. verkleinert wird.

2. Radaufhängung nach Anspruch 1, **dadurch gekennzeichnet, dass** die Verstellvorrichtungen Dämpfungsvorrichtungen (14, 15, 16) zur Dämpfung von Änderungen der Geschwindigkeit umfassen, welche bei Verstellung des zumindest einen verstellbaren Tragkörpers (9, 29, 59) auftreten.

3. Radaufhängung nach Anspruch 1 oder 2, **dadurch gekennzeichnet, dass** die Verstellvorrichtungen Federvorrichtungen (17, 18) zur Ausübung einer gegen die Verstellung dieses zumindest einen verstellbaren Tragkörpers (9, 29, 59) gerichteten Kraft umfassen.

4. Radaufhängung nach einem der Ansprüche 1-3, **dadurch gekennzeichnet, dass** der erste Zylinder (15) mit zumindest einer Durchgangsöffnung (43, 44) zur Durchlassung von Flüssigkeit von einer ersten Kammer des Zylinders (16), durch eine erste Seite des Kolben (15) begrenzt, zu einer zweiten Kammer des Zylinders (16), durch eine zweite Seite des Kolben (15) begrenzt, versehen ist, wobei zumindest eine der genannten Kammern im Zylinder (16) mit einem Ausgleichsbehälter für die Flüssigkeit verbunden ist.

5. Radaufhängung nach Anspruch 4, **dadurch gekennzeichnet, dass** der zweite Hydraulikzylinder (19) den Ausgleichsbehälter für die Flüssigkeit in dem ersten Hydraulikzylinder (16) bildet.

6. Radaufhängung nach einem der vorangegangenen Ansprüche, **dadurch gekennzeichnet,**
**dass** Detektoren zur Erfassung der Verstellung des zumindest einen Tragkörpers (9, 29, 59) vorgesehen sind und
**dass** die Position des zweiten Kolben (24) und somit der Abstand zwischen dem Fahrgestell (32) und dem genannten ersten Ende (23) der Feder (21) mit Hilfe von Hydraulikantriebsvorrichtungen, genannten zweiten Hydraulikzylinder (19) sowie genannten zweiten Kolben (24) umfassend, verstellbar ist, welche Antriebsvorrichtungen auf ein von den Detektoren generiertes Signal reagieren, dergestalt, dass genannter Abstand bei Detektion einer Verstellung des zumindest einen Tragkörpers (9, 29, 59) unter dem Einfluss einer auf das betreffende Rad (6, 36 , 56) ausgeübten inneren bzw. äußeren Querkraft vergrößert bzw. verkleinert wird.

7. Radaufhängung nach Anspruch 1, **dadurch gekennzeichnet, dass** der zumindest eine verstellbare Tragkörper einen mit einem Drehgelenk ausgestatteten Tragarm (9, 29) darstellt, um welchen Tragarm (9, 29) der Radträger (8) gelenkig aufgenommen wurde.

8. Radaufhängung nach einem der Ansprüche 1-6, **dadurch gekennzeichnet, dass** der zumindest eine verstellbare Tragkörper einen Rotor (59) umfasst, welcher in Querrichtung zum Fahrzeug verstellbar ist und wessen Rotationsachse einen Spitzwinkel zur Verstellungs-richtung einschließt, von welchem Rotor (59) an sich der daran gekoppelte Radsitz (8) erstreckt.

9. Radaufhängung nach in einem der Ansprüche 1-7, insbesondere für ein Rad (6) an einer starren Achse unten am Seitenwagenteil eines Seitenwagengespanns, wobei der Radträger (8) in Längsrichtung zum Fahrzeug gesehen an dessen Vorderseite vom verstellbaren Tragkörper (9) aufgenommen wird und genannte Achse (7) sich ab einem sich hinter dem verstellbaren Tragkörper befindenden Radträgerteil (8) erstreckt.

10. Radaufhängung nach einem der Ansprüche 1-4, insbesondere für ein Rad (6) an einer starren Achse unten am Seitenwagenteil eines Seitenwagengespanns, wobei der Radträger (8) in Längsrichtung zum Fahrzeug gesehen von zwei in einer Entfernung in Längsrichtung zu einander, während des Betriebs sich im Wesentlichen in Querrichtung zum Fahrzeug erstreckenden Tragkörpern (29, 30) aufgenommen wird und wobei sich genannte Achse (7) ab einem vor dem vordersten Tragkörper (30) herausragenden Radträgerteil (8) erstreckt.

11. Radaufhängung nach einem der Ansprüche 1-7, insbesondere für ein Rad (6) an einer starren Achse unten am Seitenwagenteil eines Seitenwagengespanns, wobei sich diese Achse (7) ab einem vor dem verstellbaren Tragkörper (9) herausragenden Radträgerteil (8) erstreckt.

12. Radaufhängung nach einem der Ansprüche 1-7, insbesondere für ein Rad (36) an einer starren Hinterachse (7) eines Fahrzeugs, wobei der Radträger (8) in Längsrichtung zum Fahrzeug gesehen an dessen Hinterseite von dem verstellbaren Tragkörper (29) aufgenommen wird und genannte Achse (7) sich ab einem vor dem verstellbaren Tragkörper (29) sich befindenden Radträgerteil (8) erstreckt.

13. Radaufhängung nach einem der Ansprüche 1-4, insbesondere für ein Rad (36) an einer starren Hinterachse (7) eines Fahrzeugs, wobei der Radträger (8) in Längsrichtung zum Fahrzeug gesehen von zwei in Längsrichtung voneinander entfernten, während des Betriebs sich im Wesentlichen in Querrichtung zum Fahrzeug erstreckenden Tragkörpern (9, 10) aufgenommen wird und wobei sich genannte Achse (7) ab einem hinter dem hinteren Tragkörper (29) herausragenden Radträgerteil (8) erstreckt.

14. Radaufhängung nach einem der Ansprüche 1-7, insbesondere für ein Rad (36) an einer starren Hinterachse (7) eines Fahrzeugs, wobei sich diese Achse (7) ab einem hinter dem verstellbaren Tragkörper (29) herausragenden Radträgerteil (8) erstreckt.

## Revendications

1. Suspension de roue pour une roue (6, 36, 56) sur un essieu fixe (7) sous un véhicule, comprenant au moins un élément de support (9, 29, 59) qui à l'état opérationnel s'étend substantiellement dans la direction transversale du véhicule, ledit élément de support recevant un support de roue (8) s'étendant substantiellement dans la direction longitudinale, et ledit essieu (7) s'étendant dans la direction transversale à partir dudit support de roue, ladite suspension de roue étant pourvue de moyens de déplacement comprenant un premier cylindre hydraulique (16) et un premier piston (15) pouvant se déplacer dans celui-ci, ledit premier piston (15) pouvant être couplé à au moins un élément de support déplaçable (9, 29, 59), au moyen duquel le au moins un élément de support (9, 29, 59) peut être déplacé sur une distance déterminée dans la direction transversale du véhicule sous l'influence d'une force exercée sur la roue (8) dans la direction transversale d'une manière telle que lors d'un déplacement vers l'avant du véhicule la roue (8) soit dirigée avec ses surfaces latérales dans la direction de translation de cette roue par le support de roue (9, 29, 59), dans laquelle le châssis (32) du véhicule est supporté au moyen d'un ressort (21) sur le support de roue (8) d'une manière telle qu'une première extrémité (24) du ressort (21) soit reliée au châssis (32) et que l'autre extrémité (25) du ressort (21) soit supportée sur le support de roue (8), **caractérisée en ce qu'**un second cylindre hydraulique (19) muni d'un second piston (24) pouvant se déplacer dans celui-ci est placé entre le châssis (32) et ladite première extrémité (24) du ressort (21), dans laquelle la distance entre le châssis (32) et ladite première extrémité (24) est déterminée par la position du second piston, et **en ce que** le second piston (24) est couplé aux moyens de déplacement d'une manière telle que ladite distance soit accrue ou réduite dans le cas d'un déplacement du au moins un élément de support (9, 29, 59) sous l'influence d'une force transversale vers l'intérieur respectivement vers l'extérieur exercée sur la roue concernée (6, 36, 56).

2. Suspension de roue conformément à la revendication 1, **caractérisée en ce que** les moyens de déplacement comprennent des moyens d'amortissement (14, 15, 16) destinés à amortir les changements de vitesse qui se produisent lors du déplacement du au moins un élément de support déplaçable (9, 29, 59).

3. Suspension de roue conformément à la revendication 1 ou 2, **caractérisée en ce que** les moyens de déplacement comprennent des moyens de ressort (17, 18) prévus pour exercer une force sur l'élément de support (9, 29, 59) dirigée contre le déplacement de cet au moins un élément de support déplaçable.

4. Suspension de roue conformément à l'une quelconque des revendications 1 à 3, **caractérisée en ce que** le premier piston (15) est pourvu d'au moins une ouverture de passage (43, 44) prévue pour le passage d'un liquide à partir d'un premier espace dans le cylindre (16) limité par un premier côté du piston (15) jusqu'à un second espace dans le cylindre (16) limité par un second côté du piston (15), et dans laquelle au moins un desdits espaces dans le cylindre (16) est en communication avec un volume de tampon pour le liquide.

5. Suspension de roue conformément à la revendication 4, **caractérisée en ce que** le second cylindre hydraulique (19) forme le volume de tampon pour le liquide dans le premier cylindre hydraulique (16).

6. Suspension de roue conformément à l'une quelconque des revendications qui précèdent, **caractérisée en ce que**
des moyens de détection sont prévus afin de détecter le déplacement du au moins un élément de support (9, 29, 59), et
la position du second piston (24) et par conséquent la distance entre le châssis (32) et ladite première extrémité extérieure (23) du ressort (21) est réglable en utilisant des moyens d'entraînement hydrauliques comprenant ledit second cylindre hydraulique (19) et ledit second piston (24), lesdits moyens d'entraînement répondant à un signal généré par les moyens de détection d'une manière telle que ladite distance soit accrue ou réduite lors de la détection d'un déplacement du au moins un élément de support (9, 29, 59) sous l'influence d'une force transversale vers l'intérieur respectivement vers l'extérieur exercée sur la roue concernée (6, 36, 56).

7. Suspension de roue conformément à la revendication 1, **caractérisée en ce que** le au moins un élément de support déplaçable est un bras de support (9, 29) pourvu d'une charnière, bras de support (9, 29) autour duquel le support de roue (8) est monté de façon articulée.

8. Suspension de roue conformément à l'une quelconque des revendications 1 à 6, **caractérisée en ce que** le au moins un élément de support comprend un rotor (59) qui peut être déplacé dans la direction transversale du véhicule et dont l'axe de rotation forme un angle aigu avec la direction de déplacement, rotor (59) à partir duquel s'étend le support de roue (8) couplé rigidement à celui-ci.

9. Suspension de roue conformément à l'une quelconque des revendications 1 à 7, en particulier pour une roue (6) sur un essieu fixe en dessous de la partie de side-car d'une motocyclette avec side-car, dans laquelle le support de roue (8), considéré dans le sens de la longueur du véhicule, est reçu à l'avant par l'élément de support déplaçable (9) et ledit essieu (7) s'étend à partir d'une partie du support de roue (8) situé derrière l'élément de support déplaçable (9).

10. Suspension de roue conformément à l'une quelconque des revendications 1 à 4, en particulier pour une roue (6) sur un essieu fixe (7) sous la partie de side-car d'une motocyclette avec side-car, dans laquelle le support de roue (8), considéré dans le sens de la longueur du véhicule, est reçu par au moins deux éléments de support (29, 30) qui se trouvent écartés à distance l'un de l'autre dans la direction longitudinale et qui à l'état opérationnel s'étendent substantiellement dans la direction transversale du véhicule, et dans laquelle ledit essieu (7) s'étend à partir d'une partie du support de roue (8) faisant saillie devant l'élément de support avant (30).

11. Suspension de roue conformément à l'une quelconque des revendications 1 à 7, en particulier pour une roue (6) sur un essieu fixe (7) en dessous de la partie de side-car d'une motocyclette avec side-car, dans laquelle cet essieu (7) s'étend à partir d'une partie du support de roue (8) faisant saillie devant l'élément de support déplaçable (9).

12. Suspension de roue conformément à l'une quelconque des revendications 1 à 7, en particulier pour une roue (36) sur un essieu arrière fixe (7) d'un véhicule, dans laquelle le support de roue (8), considéré dans le sens de la longueur du véhicule, est reçu à l'arrière par l'élément de support déplaçable (29) et ledit essieu (7) s'étend à partir d'une partie du support de roue (8) située devant l'élément de support déplaçable (29).

13. Suspension de roue conformément à l'une quelconque des revendications 1 à 4, en particulier pour une roue (36) sur un essieu arrière fixe (7) d'un véhicule, dans laquelle le support de roue (8), considéré dans le sens de la longueur du véhicule, est reçu par au moins deux éléments de support (9, 10) qui se trouvent écartés à distance l'un de l'autre dans la direction longitudinale et qui à l'état opérationnel s'étendent substantiellement dans la direction transversale du véhicule, et ledit essieu (7) s'étend à partir d'une partie du support de roue (8) faisant saillie derrière l'élément de support arrière (29).

14. Suspension de roue conformément à l'une quelconque des revendications 1 à 7, en particulier pour une roue (36) sur un essieu arrière fixe (7) d'un véhicule, dans laquelle cet essieu (7) s'étend à partir d'une partie du support de roue (8) faisant saillie derrière l'élément de support déplaçable (29).
